(19) Europäisches Patentamt
European Patent Office
Office européen des brevets

(11) **EP 4 644 974 A1**

(12) **EUROPEAN PATENT APPLICATION**
published in accordance with Art. 153(4) EPC

(43) Date of publication:
**05.11.2025 Bulletin 2025/45**

(21) Application number: **23912111.4**

(22) Date of filing: **26.12.2023**

(51) International Patent Classification (IPC):
***G02C 7/00*** *(2006.01)* ***G02B 5/22*** *(2006.01)*
***G02C 7/10*** *(2006.01)*

(52) Cooperative Patent Classification (CPC):
**G02B 5/22; G02C 7/00; G02C 7/10**

(86) International application number:
**PCT/JP2023/046569**

(87) International publication number:
**WO 2024/143332 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022211332**

(71) Applicants:
- **Nikon-Essilor Co., Ltd.**
  **Tokyo 130-0026 (JP)**
- **Iris Communication Kabushiki Kaisha**
  **Tokyo 101-0047 (JP)**

(72) Inventors:
- **TAKEDOMI Yuka**
  **Tokyo 130-0026 (JP)**
- **YANO Masafumi**
  **Sendai-shi, Miyagi 981-8004 (JP)**

(74) Representative: **Viering, Jentschura & Partner mbB**
**Patent- und Rechtsanwälte**
**Grillparzerstraße 14**
**81675 München (DE)**

(54) **EYEGLASS LENS**

(57) An object of the disclosure is to provide a spectacle lens capable of reducing glare in more users when worn by users with oxyopia. The spectacle lens of the disclosure is a spectacle lens containing a colorant, wherein the colorant includes a specific colorant having a maximum absorption wavelength in a wavelength range of 400 of 510 nm, a maximum absorption coefficient of the specific colorant at wavelengths of 550 to 780 nm is 1/5 or less of an absorption coefficient of the specific colorant at the maximum absorption wavelength, when an average transmittance of the spectacle lens at wavelengths of 430 to 480 nm is Ta, a transmittance of the spectacle lens at every 5 nm interval at the wavelengths of 430 to 480 nm is within a range of Ta $\pm$ y, and when an average transmittance of the spectacle lens at wavelengths of 550 to 780 nm is Tb, Tb is more than Ta, where y is a value represented by Formula (1): $y = (100\% - Ta) \times 0.1$, where units of Ta, Tb, and y are %.

FIG. 2

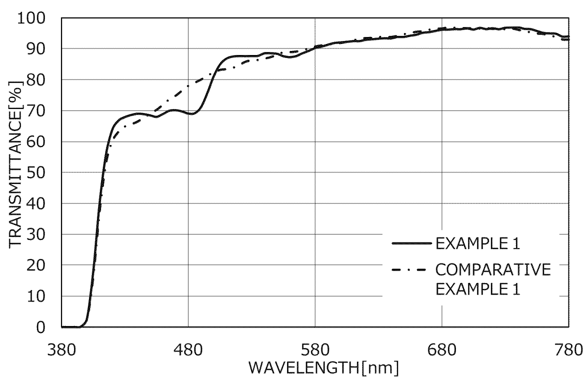


EP 4 644 974 A1

## Description

### TECHNICAL FIELD

The present disclosure relates to a spectacle lens.

### BACKGROUND ART

Among the types of hypersensitivity, visual hypersensitivity is also called oxyopia.
The oxyopia is roughly classified into hypersensitivity to brightness and hypersensitivity to a specific color. People with oxyopia may find the light from the sun or LED lighting too bright to keep their eyes open, may find fluorescent lights flickering, or may be unable to look directly at specific colors, which can often cause inconvenience in their daily lives.
It is considered that the oxyopia as described above is caused by the sensitivity of cone cells (S cone cells, M cone cells, and L cone cells) present in the retina being different from that of most people. In particular, since the energy of light stimulating S cone cells (maximum absorption wavelength of S cone: about 420 nm) is higher than the energy of light stimulating other cone cells, it is considered that oxyopia is often caused by stimulation of S cone cells. Therefore, controlling the amount of light that stimulates S cone cells is expected to improve some of the conditions of oxyopia.
Meanwhile, various studies have been conducted on a spectacle lens that cuts light (blue light) that stimulates S cone cells. For example, Patent Literature 1 discloses a spectacle lens that reflects blue light by using a multilayer film.

### CITATION LIST

### PATENT LITERATURE

Patent Literature 1: WO 2020/067407 A

### SUMMARY OF INVENTION

The present disclosure relates to a spectacle lens containing a colorant,

wherein the colorant includes a specific colorant having a maximum absorption wavelength in a wavelength range of 400 of 510 nm,
a maximum absorption coefficient of the specific colorant at wavelengths of 550 to 780 nm is 1/5 or less of an absorption coefficient of the specific colorant at the maximum absorption wavelength,
when an average transmittance of the spectacle lens at wavelengths of 430 to 480 nm is Ta, a transmittance of the spectacle lens at every 5 nm interval at the wavelengths of 430 to 480 nm is within a range of Ta ± y, and
when an average transmittance of the spectacle lens at wavelengths of 550 to 780 nm is Tb, Tb is more than Ta, where y is a value represented by Formula (1):

$$\text{Formula (1)} \quad y = (100\% - Ta) \times 0.1,$$

### BRIEF DESCRIPTION OF DRAWINGS

[FIG. 1] FIG. 1 is a sectional view of an embodiment of a spectacle lens.
[FIG. 2] FIG. 2 shows transmission spectra of spectacle lenses of Example 1 and Comparative Example 1.
[FIG. 3] FIG. 3 shows transmission spectra of spectacle lenses of Example 2 and Comparative Example 2.
[FIG. 4] FIG. 4 shows transmission spectra of spectacle lenses of Example 3 and Comparative Example 3.
[FIG. 5] FIG. 5 shows transmission spectra of spectacle lenses of Example 4 and Comparative Example 4.

### DESCRIPTION OF EMBODIMENTS

Hereinafter, a spectacle lens of the present disclosure will be described in detail.
It is considered that there are individual differences in the degree of oxyopia. Spectacle lenses are desired to reduce glare in more users when worn by users with oxyopia. When the spectacle lens of the present disclosure is worn by

users with oxyopia, glare is reduced in more users.

In the present description, "to" is used to mean that numerical values stated before and after "to" are included as a lower limit value and an upper limit value.

In addition, in the present description, the refractive index is a refractive index with an e-ray.

FIG. 1 is a sectional view of an embodiment of a spectacle lens.

A spectacle lens 10 shown in FIG. 1 includes a spectacle lens base 12, a hard coat layer 14 disposed on one side of the spectacle lens base 12, and an antireflection film 16 disposed on a side of the hard coat layer 14 opposite to the spectacle lens base 12 side.

In the spectacle lens 10 shown in FIG. 1, the spectacle lens base 12 contains a colorant. The colorant includes a specific colorant having a maximum absorption wavelength in a wavelength range of 400 to 510 nm, and the maximum absorption coefficient of the specific colorant at wavelengths of 550 to 780 nm is 1/5 or less of the absorption coefficient of the specific colorant at the maximum absorption wavelength.

In addition, in the spectacle lens 10 shown in FIG. 1, when the average transmittance at wavelengths of 430 to 480 nm is Ta (unit: %), the transmittance of the spectacle lens at every 5 nm interval at the wavelengths of 430 to 480 nm is within a range of Ta ± y. Here, y (unit: %) is a value represented by the following Formula (1).

$$\text{Formula (1)} \quad y = (100\% - Ta) \times 0.1$$

A method of measuring the transmittance of the spectacle lens 10 will be described in detail later.

In addition, in the spectacle lens 10 shown in FIG. 1, when the average transmittance at wavelengths of 550 to 780 nm is Tb (unit: %), Tb is more than Ta above.

Satisfying the above requirements regarding the transmittance indicates that a light beam in the wavelength range of 430 to 480 nm is uniformly cut, and the transmittance in the other wavelength region (wavelengths of 550 to 780 nm) is higher than the transmittance in a wavelength range of 430 to 480 nm. Since blue light can be effectively cut by satisfying the requirements regarding the transmittance of the spectacle lens 10, it is considered that glare is reduced in more users.

The spectacle lens of the present disclosure is not limited to the embodiment shown in FIG. 1. In FIG. 1, the hard coat layer 14 is disposed to be in direct contact with the spectacle lens base 12, but the arrangement is not limited to this, and as will be described later, another layer (for example, a primer layer) may be disposed between the spectacle lens base 12 and the hard coat layer 14. That is, the hard coat layer 14 may be directly disposed on the spectacle lens base 12 or may be indirectly disposed on or above the spectacle lens base 12 with another layer interposed therebetween. In addition, the hard coat layer 14 need not be disposed.

Further, a water-repellent and oil-repellent layer may be disposed on the side of the antireflection film 16 opposite to the spectacle lens base 12 side. Note that the antireflection film 16 need not be disposed.

The other layer (for example, a primer layer), the antireflection film, and the water-repellent and oil-repellent layer will be described in detail later.

In FIG. 1, the hard coat layer 14 and the antireflection film 16 are disposed on one side of the spectacle lens base 12, but the hard coat layer 14 and the antireflection film 16 may be disposed on each side of the spectacle lens base 12. The other layer and the water-repellent and oil-repellent layer may also be disposed on each side of the spectacle lens base 12.

In the embodiment shown in FIG. 1, the embodiment in which the specific colorant is contained in the spectacle lens base 12 has been described, but the spectacle lens of the present disclosure is not limited to this embodiment. In the spectacle lens of the present disclosure, the specific colorant may be contained in any layer, for example, may be contained in the hard coat layer 14. In addition, the specific colorant may be contained in a layer not shown in FIG. 1 such as the other layer described above. The specific colorant may be contained in a plurality of members.

However, even in an embodiment in which the specific colorant is contained in another layer than the spectacle lens base 12, the requirements regarding the transmittance of the spectacle lens 10 are satisfied.

Hereinafter, the spectacle lens of the present disclosure will be described in detail.

<Specific colorant>

The spectacle lens of the present disclosure contains a colorant, and the colorant includes a specific colorant.

The specific colorant has a maximum absorption wavelength in a wavelength range of 400 of 510 nm, and the maximum absorption coefficient at wavelengths of 550 to 780 nm is 1/5 or less of the absorption coefficient at the maximum absorption wavelength. Since the spectacle lens of the present disclosure contains the specific colorant as a colorant, the above-described requirements regarding the transmittance of the spectacle lens are easily satisfied. The requirements regarding the transmittance will be described in detail later.

The maximum absorption wavelength and the absorption coefficient at the maximum absorption wavelength of the specific colorant and the maximum absorption coefficient at wavelengths of 550 to 780 nm can be measured with a

known spectrophotometer. For example, a transmission spectrum of a colorant liquid in which the specific colorant is dissolved or dispersed may be obtained by using a spectrophotometer, and the absorbance may be obtained from the transmission spectrum.

The maximum absorption coefficient of the specific colorant at wavelengths of 550 to 780 nm is preferably smaller than the absorption coefficient thereof at the maximum absorption wavelength, and is, for example, 1/5 or less, but is preferably 1/10 or less, and more preferably 1/20 or less. The lower limit is 0 or more.

The absorption coefficient at the maximum absorption wavelength of the specific colorant is not particularly limited as long as the requirements regarding the absorption coefficient are satisfied, but for example, is preferably $5.0 \times 10^3$ mL/(g·cm) or more, and more preferably $5.0 \times 10^4$ mL/(g·cm) or more. The upper limit of the absorption coefficient is not particularly limited, but is $1.0 \times 10^6$ mL/(g·cm) or less, for instance.

The maximum absorption coefficient of the specific colorant at wavelengths of 550 to 780 nm is not particularly limited as long as the requirements regarding the absorption coefficient are satisfied, but for example, the maximum absorption coefficient is preferably $1.0 \times 10^3$ mL/(g·cm) or less, and more preferably $5.0 \times 10^2$ mL/(g·cm) or less. The lower limit of the absorption coefficient is not particularly limited, and may be 0.

The specific colorant is not particularly limited as long as the above requirements are satisfied, and a known colorant may be used. The specific colorant may be an inorganic substance or an organic substance. That is, the specific colorant may be an inorganic colorant (hereinafter, also referred to as "specific inorganic colorant") which has a maximum absorption wavelength in a wavelength range of 400 of 510 nm and of which the maximum absorption coefficient at wavelengths of 550 to 780 nm is 1/5 or less of its absorption coefficient at the maximum absorption wavelength, or an organic colorant (hereinafter, also referred to as a "specific organic colorant") which has a maximum absorption wavelength in a wavelength range of 400 of 510 nm and of which the maximum absorption coefficient at wavelengths of 550 to 780 nm is 1/5 or less of its absorption coefficient at the maximum absorption wavelength.

The specific colorant may be dissolved in water or an organic solvent, or need not be dissolved in water or an organic solvent. That is, the specific colorant may be a dye (hereinafter, also referred to as a "specific dye") which has a maximum absorption wavelength in a wavelength range of 400 of 510 nm and of which the maximum absorption coefficient at wavelengths of 550 to 780 nm is 1/5 or less of its absorption coefficient at the maximum absorption wavelength, or may be a pigment (hereinafter, also referred to as a "specific pigment") which has a maximum absorption wavelength in a wavelength range of 400 to 500 nm and of which the maximum absorption coefficient at wavelengths of 550 to 780 nm is 1/5 or less of its absorption coefficient at the maximum absorption wavelength.

That is, the specific colorant may be any of a specific inorganic dye, a specific inorganic pigment, a specific organic dye, and a specific organic pigment. The specific inorganic dye refers to the one corresponding to the specific inorganic colorant and the specific dye, and the specific inorganic pigment refers to the one corresponding to the specific inorganic colorant and the specific pigment. The specific organic dye refers to the one corresponding to the specific organic colorant and the specific dye, and the specific organic pigment refers to the one corresponding to the specific organic colorant and the specific pigment.

Among them, the specific colorant is preferably the specific inorganic dye or the specific organic dye, and more preferably the specific organic dye from the viewpoint of easily producing a spectacle lens containing the specific colorant.

The specific inorganic dye or the specific organic dye is not particularly limited as long as the above requirements are satisfied, and may be one classified as any of a disperse dye, a reactive dye, a direct dye, a complex dye, an acidic dye, a metal complex salt dye, a vat dye, a sulfide dye, a fluorescent dye, a luminous dye, and a resin coloring dye.

As the specific organic dye, for example, a specific organic dye containing a heteroatom (for example, a nitrogen atom or an oxygen atom) other than a carbon atom is preferable. Examples of the specific organic dye include azo dyes, pyrazolone dyes, quinoline dyes, and cyanine dyes.

As the specific organic dye, a commercially available product may be used. Examples of commercially available products of the specific organic dye include FDB-001, FDB-002, FDB-003, FDB-004, FDB-005, FDB-006, FDB-007, and FDB-009 manufactured by Yamada Chemical Co., Ltd., FSP YELLOW LY dye manufactured by Futaba Industrial Co., Ltd., ABS407, ABS420, and ABS490 manufactured by Exciton, RDW Y03 manufactured by FUJIFILM Wako Pure Chemical Corporation, and Kayalon Polyester Yellow AL manufactured by Nippon Kayaku Co., Ltd.

In the spectacle lens of the present disclosure, the number of types of the specific colorants included in the colorant is not particularly limited as long as the requirements regarding the transmittance of the spectacle lens are satisfied, and may be one type or two or more types. In particular, the colorant preferably includes two or more types of the specific colorants from the viewpoint of easily satisfying the requirements regarding the transmittance of the spectacle lens. The upper limit of the types of the specific colorants is not particularly limited, and is, for example, five or less types.

<Characteristics of spectacle lens>

The spectacle lens of the present disclosure satisfies the following requirements regarding the transmittance.

That is, when the average transmittance at wavelengths of 430 to 480 nm is Ta (unit: %), the transmittance of the

spectacle lens at every 5 nm interval at wavelengths of 430 to 480 nm is within the range of Ta ± y. Here, y (unit: %) is a value represented by the following Formula (1).

$$\text{Formula (1)} \quad y = (100\% - Ta) \times 0.1$$

For example, when the average transmittance at wavelengths of 430 to 480 nm is 80%, Ta is 80% and y is 2%. Therefore, in the spectacle lens of the present disclosure, when Ta is 80%, the transmittance of the spectacle lens at every 5 nm interval at wavelengths of 430 to 480 nm is within a range of 78 to 82%.

When the average transmittance at wavelengths of 550 to 780 nm is Tb (unit: %), Tb is more than Ta above.

Ta (the average transmittance at wavelengths of 430 to 480 nm) and Tb (the average transmittance at wavelengths of 550 to 780 nm) are obtained as follows.

First, a transmission spectrum of a spectacle lens is acquired in the same direction as the optical axis of the spectacle lens. A spectrophotometer is used to acquire the transmission spectrum.

From the obtained transmission spectrum, the average transmittance (Ta) at wavelengths of 430 to 480 nm and the average transmittance (Tb) at wavelengths of 550 to 780 nm are obtained. When Ta and Tb are obtained, the transmittance at every 5 nm interval is arithmetically averaged in each of the wavelength ranges in the obtained transmission spectrum. For example, when Ta is calculated, the transmittance of the spectacle lens at the respective wavelengths (430, 435, 440, ......, and 480 nm) at 5 nm intervals in the wavelength range of 430 to 480 nm in the obtained transmission spectrum is arithmetically averaged.

In addition, the value of y is obtained according to the above Formula (1).

Note that the phrase "a transmittance of the spectacle lens at every 5 nm interval at the wavelengths of 430 to 480 nm is within a range of Ta ± y" specifically indicates that the transmittance at the respective wavelengths (430, 435, 440, ......, and 480 nm) in the obtained transmission spectrum is within the range of Ta ± y.

For Ta and Tb, it is also preferable to satisfy a relationship of the following Formula (2) in that blue light can be more effectively cut.

$$\text{Formula (2)} \quad 0.1 \leq (100\% - Tb)/(100\% - Ta) \leq 0.9$$

In addition, from the viewpoint of enhancing the effect of suppressing oxyopia, the value of (100% - Tb)/(100% - Ta) is preferably 0.5 to 0.9, and more preferably 0.7 to 0.8. On the other hand, from the viewpoint of keeping high luminous transmittance of the spectacle lens, the value of (100% - Tb)/(100% - Ta) is preferably 0.1 to 0.5 and more preferably 0.1 to 0.3.

The value of Ta is not particularly limited as long as the above Formula (1) is satisfied, but is preferably 2 to 90%, more preferably 10 to 80%, and still more preferably 15 to 75%.

The value of Tb is not particularly limited as long as it is larger than Ta, but is preferably 50 to 95%, more preferably 60 to 95%, and still more preferably 70 to 95%.

An average transmittance Tc (unit: %) of the spectacle lens base at wavelengths of 380 to 430 nm is not particularly limited, but is preferably Ta or less. Specifically, Tc is preferably 0 to 70%, and more preferably 0 to 50%.

Tc is obtained from the transmission spectrum obtained by the above-described method. Tc is determined by arithmetically averaging the transmittance at every 5 nm interval in the above wavelength range of the obtained transmission spectrum.

An average transmittance Td (unit: %) of the spectacle lens base at wavelengths of 480 to 550 nm is not particularly limited, but is preferably Ta or more and Tb or less. Specifically, Td is preferably 10 to 95%, and more preferably 15 to 95%.

A ratio (Td/Tb) of Td to Tb is preferably 0.4 to 0.95, and more preferably 0.6 to 0.9.

Td is obtained from the transmission spectrum obtained by the above-described method. Td is determined by arithmetically averaging the transmittance at every 5 nm interval in the above wavelength range of the obtained transmission spectrum.

In the spectacle lens of the present disclosure, the transmission spectrum is adjusted to satisfy the above-described requirements regarding the transmittance. For example, the transmission spectrum can be adjusted by using the type of the specific colorant and the content thereof.

Hereinafter, each constituent that may be included in the spectacle lens will be described in detail.

<Spectacle lens base>

The spectacle lens base is a member that supports a layer included in the spectacle lens.

The type of the spectacle lens base is not particularly limited, and examples thereof include normal spectacle lens

bases made of plastic, inorganic glass, and the like, and plastic spectacle lens bases are preferable from the viewpoint of excellent handling properties.

The type of the plastic spectacle lens base is not particularly limited, and examples thereof include a finish lens that is optically finished on both a convex surface and a concave surface and formed according to a desired power, a semi-finish lens in which only a convex surface is finished as an optical surface (for example, a spherical surface, a rotation target aspheric surface, or a progressive surface), and a lens in which the concave surface of a semi-finish lens is processed and polished according to a wearer's prescription.

The type of plastic (so-called resin) contained in the plastic spectacle lens base is not particularly limited, and examples thereof include a (meth)acrylic acid ester resin, a thiourethane resin, an allyl resin, an episulfide resin, polycarbonate, a urethane resin, polyester, polystyrene, polyether sulfone, poly(4-methylpentene)-1, and a diethylene glycol bisallyl carbonate resin (CR-39). Among them, a thiourethane resin, an episulfide resin, and a diethylene glycol bisallyl carbonate resin are suitably used.

The thiourethane resin is obtained from a polyisocyanate compound and a polythiol compound.

As the polyisocyanate compound, it is preferable to use at least one selected from m-xylylene diisocyanate, a mixture of 2,5-bis(isocyanatomethyl)-bicyclo[2,2,1]-heptane and 2,6-bis(isocyanatomethyl)-bicyclo[2,2,1]-heptane, isophorone diisocyanate, hexamethylene diisocyanate, and tolylene diisocyanate.

As the polythiol compound, it is preferable to use at least one selected from pentaerythritol tetrakis(3-mercaptopropionate), 1,2-bis[(2-mercaptoethyl)thio]-3-mercaptopropane, and a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane.

The episulfide resin is obtained through ring-opening polymerization of a monomer having an episulfide group (also referred to as an epithio group) or a mixed monomer including this monomer. As the monomer having an episulfide group, it is preferable to use at least one selected from bis(2,3-epithiopropyl)sulfide and bis(2,3-epithiopropyl)disulfide.

A thickness of the plastic spectacle lens base is not particularly limited, but it is often about 1 to 30 mm from the viewpoint of handleability.

A refractive index of the plastic spectacle lens base is not particularly limited, but is often 1.50 or more, preferably 1.60 to 1.80, and more preferably 1.60 to 1.74.

In the spectacle lens of the present disclosure, the spectacle lens base preferably contains the above-described specific colorant. However, in a case where the spectacle lens base contains the specific colorant, the type and content of the specific colorant are adjusted to satisfy the above characteristics of the spectacle lens.

In addition, the spectacle lens of the present disclosure may contain a colorant other than the specific colorant described above (hereinafter, also referred to as "another colorant").

As another colorant, a known colorant may be used. Another colorant may be an inorganic colorant or an organic colorant. Another colorant may be a dye (another dye) that dissolves in water or an organic solvent, or may be a pigment that does not dissolve in water or an organic solvent. In particular, another colorant is preferably an inorganic dye or an organic dye, and more preferably an organic dye from the viewpoint of easily producing a spectacle lens containing another colorant.

Another dye may be one classified as any one of a disperse dye, a reactive dye, a direct dye, a complex dye, an acidic dye, a metal complex dye, a vat dye, a sulfide dye, a fluorescent dye, a luminous dye, a resin coloring dye, and other functional dyes.

Examples of another dye include a red (R) dye, a blue (B) dye, a brown dye, a violet dye, an orange dye, and a black dye.

Examples of the red dye include Kayalon polyester Red (Kayalon Microester Red) AUL-S, Kayalon Microester Red 5L-E, Kayalon Microester Red C-LS conc, Kayalon Microester Red DX-LS, Kayalon polyester Red AN-SE, Kayalon Polyester Red B-LE, and Kayaron Polyester Rubine GL-SE 200 (manufactured by Nippon Kayaku Co., Ltd), Kiwalon polyester Red ESP and Kiwalon polyester Red KN-SE (manufactured by Kiwa Chemical Industry Co., Ltd), FSP-Red BL (manufactured by Futaba Industrial Co., Ltd), and Dianix Red (manufactured by DyStar Japan Ltd).

Examples of the blue dye include Kayalon polyester blue AUL-S dye (manufactured by Nippon Kayaku Co., Ltd), Dianix Blue AC-E (manufactured by DyStar Japan Co., Ltd), Kiwalon Polyester Blue ESP and Kiwalon Polyester Blue KN-SE (manufactured by Kiwa Chemical Co., Ltd), Kayalon Microester Blue AQ-LE, Kayaron Microester Blue 5L-E, Kayalon Microester Blue C-LS conc, Kayalon Microester Blue DX-LS conc, Kayalon Polyester Blue AN-SE, and Kayaron Polyester Blue AUL-S (N) (manufactured by Nippon Kayaku Co., Ltd), and FSP-Blue AUL-S (manufactured by Futaba Industrial Co., Ltd).

Another colorant may be used singly or in combination of two or more types thereof. In terms of easy adjustment of the transmission spectrum of the spectacle lens, two or more types of other colorants may be used in combination.

In addition, the spectacle lens base may contain additives such as a bluing agent, a light stabilizer, an ultraviolet absorber, and an antioxidant.

Examples of a method of allowing a colorant (one or more of the specific colorant and other colorants) to be

contained in the spectacle lens base include a method of using a raw material in which a material constituting the spectacle lens base and the colorant are mixed at the time of molding the spectacle lens base, and a method of causing the colorant to permeate into the spectacle lens base. Out of the methods, the method of causing the colorant to permeate into the spectacle lens base is preferable.

In a case where the colorant is caused to permeate into the spectacle lens base, it is preferable to use a colorant liquid (preferably a dyeing liquid) containing the colorant (preferably a dye). The colorant liquid preferably contains a colorant (preferably a dye), a surfactant, and a solvent (for example, water). The colorant liquid may contain two or more types of colorants. As the colorant (preferably, a dye), any of those described above may be used. The colorant liquid may contain the specific colorant and another colorant.

The surfactant is not particularly limited as long as the colorant can be uniformly dispersed in a solvent such as water.

Examples of the surfactant include ionic surfactants (for example, an anionic surfactant and a cationic surfactant) and nonionic surfactants.

Examples of the solvent include water and an organic solvent.

Examples of the organic solvent include an alcohol-based solvent, a ketone-based solvent, an ether-based solvent, an ester-based solvent, a hydrocarbon-based solvent, a halogenated hydrocarbon-based solvent, an amide-based solvent, a sulfone-based solvent, and a sulfoxide-based solvent.

The colorant liquid may contain various additives such as a pH adjusting agent, a viscosity adjusting agent, a leveling agent, a matting agent, a stabilizer, an ultraviolet absorber, and an antioxidant, as necessary.

The content of the colorant contained in the colorant liquid is preferably 0.001 to 10% by mass and more preferably 0.01 to 5% by mass with respect to the total mass of the colorant liquid.

The content of the surfactant contained in the colorant liquid is preferably 0.001 to 10% by mass, and more preferably 0.005 to 5% by mass with respect to the total mass of the colorant liquid.

More specifically, examples of a method of dyeing at least one surface of the plastic spectacle lens base include the following three methods.

(1) A method in which a surface of a plastic spectacle lens base is coated with a dyeing liquid and heated to dye the surface of the plastic spectacle lens base (coating method)
(2) A method in which the plastic spectacle lens base is immersed in a heated dyeing liquid to dye the surface of the plastic spectacle lens base (dipping method)
(3) A method in which a transfer medium is coated with a sublimation colorant, and the plastic spectacle lens base is disposed in the vicinity of the transfer medium and heated, whereby the surface of the plastic spectacle lens base is dyed (sublimation dyeing method)

Among the three methods, the coating method of the above (1) is preferable from the viewpoint that the amount of dyeing liquid used is small and the production cost can be reduced. On the other hand, the dipping method of the above (2) is preferable from the viewpoint of easy uniform application, and the sublimation dyeing method of the above (3) is preferable from the viewpoint of easy patterning, so that a method may be selected according to application. These methods may be used singly or in combination.

Examples of the method of applying the dyeing liquid to the plastic spectacle lens base in the coating method described above include normal application methods such as brush coating, dipping, spin coating, roll coating, spray coating, flow coating, and inkjet coating.

Regarding the application, coating may be performed on one side of the plastic spectacle lens base, or coating may be performed on both sides in order to further increase the dye concentration.

A coating thickness of the dyeing liquid on the plastic spectacle lens base can be adjusted as appropriate, and may be, for example, in the range of 0.01 to 10 μm.

When the plastic spectacle lens base is dyed (colored) in the dyeing by the coating method, it is preferable that the dyeing liquid is applied onto the surface of the plastic spectacle lens base and then subjected to a heat treatment to allow the dye in the dyeing liquid to permeate and diffuse into the surface of the plastic spectacle lens base.

As heating conditions for the plastic spectacle lens base coated with the dyeing liquid, the heating temperature is preferably 70 to 180°C, and the heating time is preferably 10 to 180 minutes. Examples of the heating method include far infrared irradiation heating and UV irradiation heating in addition to air oven heating.

In the dyeing by the coating method, when the plastic spectacle lens base is dyed (colored) with a gentle concentration gradient, the dyeing liquid is applied on the lens, and then the coating liquid surface (dyeing liquid surface) is heated while the heating region is gradually changed, so that the amount of dye corresponding to the concentration gradient can be caused to permeate into the plastic spectacle lens base.

The plastic spectacle lens base may be cleaned after the plastic spectacle lens base is coated with the dyeing liquid and the plastic spectacle lens base coated with the dyeing liquid is heated.

A method of cleaning the plastic spectacle lens base is not particularly limited as long as the coating layer (applied dyeing liquid) on the surface of the plastic spectacle lens base can be removed, but wiping using an organic solvent or cleaning using an alkali cleaning agent is preferable.
In a case where the plastic spectacle lens base is dyed by the above-described dipping method, the plastic spectacle lens base can be immersed in the dyeing liquid to allow the dye in the dyeing liquid to permeate and diffuse from the surface of the plastic spectacle lens base.
In the dyeing by the dipping method, it is preferable to immerse the plastic spectacle lens base in the dyeing liquid heated to 80 to 95°C.
After the immersion is completed, the plastic spectacle lens base may be cleaned. Examples of a method of cleaning the plastic spectacle lens base include wiping using a solvent.

<Primer layer>

The spectacle lens of the present disclosure may have a primer layer between the spectacle lens base and the hard coat layer. The primer layer can improve the adhesion of the hard coat layer to the spectacle lens base and impart impact resistance to the spectacle lens.
The material constituting the primer layer is not particularly limited, and a known material can be used, and for example, a resin is mainly used. The type of resin to be used is not particularly limited, and examples thereof include urethane resins, epoxy resins, phenol resins, polyimides, polyesters, bismaleimide resins, and polyolefins, and urethane resins are preferable.
The primer layer may contain another component than the resin.
Examples of another component include oxide fine particles of at least one metal selected from Si, Al, Sn, Sb, Ta, Ce, La, Fe, Zn, W, Zr, In, and Ti or composite oxide fine particles thereof, a hydrolyzable silicon compound and/or a hydrolysis condensate thereof, and a surfactant.
In addition, at least one of the specific colorant or another colorant described above may be contained as another component.
A method of forming the primer layer is not particularly limited, and a known method may be employed, and examples thereof include a method in which a primer layer forming composition containing a predetermined resin is applied onto a spectacle lens base and subjected to a curing treatment as necessary to form a primer layer.
A method of applying the primer layer forming composition is not particularly limited, and examples thereof include methods exemplified as a method of applying a hard coat layer forming composition onto a spectacle lens base which will be described later.
A thickness of the primer layer is not particularly limited, but is preferably 0.3 to 2 μm.

<Hard coat layer>

The spectacle lens of the present disclosure may have a hard coat layer. In a case where the spectacle lens has a hard coat layer, scratch resistance can be imparted to the spectacle lens.
The hard coat layer preferably exhibits a hardness of "H" or higher in pencil hardness according to a test method defined in JIS K5600.
As the hard coat layer, a known hard coat layer may be used, and examples thereof include an organic hard coat layer, an inorganic hard coat layer, and an organic-inorganic hybrid hard coat layer, and in the field of spectacle lenses, an organic-inorganic hybrid hard coat layer is generally used.
The hard coat layer preferably contains a polymer of a polymerizable monomer (a polymer obtained by polymerizing a polymerizable monomer).
The polymerizable monomer is not particularly limited, and examples thereof include a specific (meth)acrylate that will be described later, a silsesquioxane having a radically polymerizable group, a polyfunctional acrylate, a compound having a plurality of epoxy groups, and a silsesquioxane compound having an oxetanyl group.
The hard coat layer may contain an inorganic component such as metal oxide particles that will be described later.
In addition, the hard coat layer may contain at least one of the specific colorant or another colorant described above.
The hard coat layer is preferably a layer formed by using a hard coat layer forming composition containing a polymerizable monomer.

((Meth)acrylate having at least one group selected from the group consisting of a phosphate group and a sulfonate group)

Examples of the polymerizable monomer that may be contained in the hard coat layer forming composition

include a (meth)acrylate (hereinafter, also simply referred to as "specific (meth)acrylate") having at least one group (hereinafter, also simply referred to as a "specific group") selected from the group consisting of a phosphate group and a sulfonate group.

The (meth)acrylate means an acrylate or a methacrylate.

The specific group is preferably a phosphate group.

The number of the specific groups in the specific (meth)acrylate may be one or more, and may be two or more. The upper limit may be, for example, five or less.

The specific (meth)acrylate may be monofunctional or polyfunctional. The term "polyfunctional" means that the specific (meth)acrylate has two or more specific groups.

The phosphate group is a group represented by the following formula. * represents a binding position.

[Chemical Formula 1]

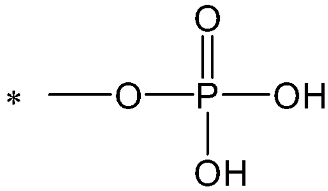

The sulfonate group is a group represented by the following formula.

[Chemical Formula 2]

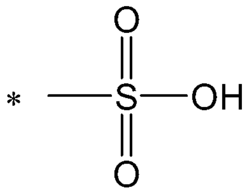

The specific (meth)acrylate is preferably a compound represented by the Formula (C).

Formula (C) $CH_2=CR^{c1}-COO-L^c-R^{c2}$

$R^{c1}$ represents a hydrogen atom or a methyl group.

$L^c$ represents a divalent hydrocarbon group which may contain a hetero atom (for example, an oxygen atom, a nitrogen atom, or a sulfur atom). The number of carbon atoms in the divalent hydrocarbon group is not particularly limited, and is preferably 1 to 10. Examples of the divalent hydrocarbon group include an alkylene group, an alkenylene group, an alkynylene group, an arylene group, and a combination of these groups, and an alkylene group optionally containing a hetero atom (for example, -O-alkylene group-) is preferable.

$R^{c2}$ represents a group selected from the group consisting of a phosphate group and a sulfonate group.

(Radically polymerizable group-containing silsesquioxane)

Examples of the polymerizable monomer that may be contained in the hard coat layer forming composition include silsesquioxane having a radically polymerizable group.

The radically polymerizable group is preferably a group having an ethylenically unsaturated bond. Examples of the group having an ethylenically unsaturated bond include a (meth)acryloyl group, a styryl group, and a vinyl group.

The silsesquioxane compound is typically a silane compound having a basic skeleton represented by Formula (D), obtained by hydrolyzing a trifunctional silane compound such as alkoxysilane, chlorosilane, or silanol. Examples of the structure of the silsesquioxane compound include, in addition to an irregular form called a random structure, a ladder structure, a cage (completely condensed cage type) structure, and an incomplete cage structure (a partially cleaved structure of a cage structure, such as a structure in which some of silicon atoms are not present in a cage structure and a structure in which a silicon-oxygen bond of a part of a cage structure is cleaved).

In the following Formula (D), $R^d$ represents an organic group.

Formula (D) $R^d\text{-}SiO_{3/2}$

The structure of the silsesquioxane compound having a radically polymerizable group is not particularly limited, but may be any of the random structure, the ladder structure, the cage structure, and the incomplete cage structure, or may be a mixture of a plurality of structures.

The radically polymerizable group equivalent contained in the silsesquioxane compound is not particularly limited, but is preferably 30 to 500 g/eq., and more preferably 30 to 150 g/eq., because the hardness of the hard coat layer is more excellent.

The silsesquioxane compound having a radically polymerizable group may be synthesized by a known method, or a commercially available product may be used.

(Polyfunctional acrylate)

Examples of the polymerizable monomer that may be contained in the hard coat layer forming composition include a polyfunctional (meth)acrylate different from either of the specific (meth)acrylate and a silsesquioxane having a radically polymerizable group.

The polyfunctional (meth)acrylate is a compound having a plurality of (meth)acryloyl groups. The number of (meth)acryloyl groups is not particularly limited, but is preferably 2 to 6, and more preferably 2 or 3.

As the polyfunctional (meth)acrylate, a compound represented by Formula (E) is preferable.

Formula (E) $CH_2{=}CR^{e1}\text{-}CO\text{-}L^{e1}\text{-}CO\text{-}CR^{e2}{=}CH_2$

$R^{e1}$ and $R^{e2}$ each independently represent a hydrogen atom or a methyl group.

$L^{e1}$ represents a divalent hydrocarbon group which may contain a hetero atom (for example, an oxygen atom, a nitrogen atom, or a sulfur atom). The number of carbon atoms in the divalent hydrocarbon group is not particularly limited, and is preferably 1 to 10. Examples of the divalent hydrocarbon group include an alkylene group, an alkenylene group, an alkynylene group, and an arylene group, each of which may contain a hetero atom, and a combination of these groups, and an alkylene group which may contain a hetero atom is preferable.

Among them, an alkylene group containing an oxygen atom is preferable, and a group represented by $\text{-O-}(L^{e2}\text{-O})_r\text{-}$ is preferable. $L^{e2}$ represents an alkylene group (of which the number of carbon atoms is preferably 1 to 3). r represents an integer of 1 or more, preferably an integer of 1 to 10, and more preferably an integer of 2 to 5.

(Compound having plurality of epoxy groups)

Examples of the polymerizable monomer that may be contained in the hard coat layer forming composition include a compound having a plurality of epoxy groups (hereinafter, also simply referred to as "polyfunctional epoxy compound").

The epoxy group is a group represented by the following Formula (F). $R^f$ represents a hydrogen atom or an alkyl group (for example, a methyl group, an ethyl group, or a propyl group). * represents a binding position.

[Chemical Formula 3]

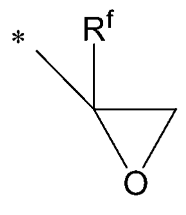

(F)

The polyfunctional epoxy compound contains a plurality of (two or more) epoxy groups. The number of epoxy groups is not particularly limited, but may be usually 2 to 6, or 2 or 3.

The type of the polyfunctional epoxy compound is not particularly limited, and examples thereof include known polyfunctional epoxy compounds. Examples of the polyfunctional epoxy compound include a bisphenol A type epoxy compound, a bisphenol F type epoxy compound, a phenol novolac type epoxy compound, a cresol novolac type epoxy

compound, and an aliphatic glycidyl ether type epoxy compound.

(Silsesquioxane compound having oxetanyl group)

Examples of the polymerizable monomer that may be contained in the hard coat layer forming composition include a silsesquioxane compound having an oxetanyl group.

The oxetanyl group is a group represented by the following Formula (G). $R^g$ represents a hydrogen atom or an alkyl group (for example, a methyl group, an ethyl group, or a propyl group). * represents a binding position.

[Chemical Formula 4]

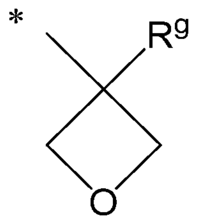

(G)

A structure of the silsesquioxane compound having an oxetanyl group is not particularly limited, but may be any of the random structure, the ladder structure, the cage structure, and the incomplete cage structure, or may be a mixture of a plurality of structures.

The oxetanyl group equivalent contained in the silsesquioxane compound is not particularly limited, but is preferably 50 to 500 g/eq., and more preferably 150 to 300 g/eq., because the hardness of the hard coat layer is more excellent.

The silsesquioxane compound having an oxetanyl group may be synthesized by a known method, or a commercially available product may be used. Examples of the commercially available product include OX-SQ TX-100, OX-SQ SI-20, and OX-SQ HDX manufactured by Toagosei Co., Ltd.

(Metal oxide particles)

The hard coat layer forming composition may contain metal oxide particles.

The type of the metal oxide particles is not particularly limited, and examples thereof include known metal oxide particles. Examples of the metal oxide particles include particles of an oxide of at least one metal selected from Si, Al, Sn, Sb, Ta, Ce, La, Fe, Zn, W, Zr, In, and Ti. Among them, the metal oxide particles are preferably particles of an oxide containing Si (silicon oxide particles), particles of an oxide containing Sn (tin oxide particles), particles of an oxide containing Zr (zirconium oxide particles), or particles of an oxide containing Ti (titanium oxide particles) from the viewpoint of handleability.

The metal oxide particles may contain, among the metals exemplified above, only one metal (metal atom), or two or more metals (metal atoms).

In addition, while Si (silicon) is sometimes classified as a semi-metal, Si is included in the metal in the present description.

The average particle size of the metal oxide particles is not particularly limited, but is, for example, preferably 1 to 200 nm, and more preferably 5 to 30 nm. When the average particle size is within the above range, the dispersion stability of the metal oxide particles in the hard coat layer forming composition is more excellent.

The average particle size is determined by measuring the diameters of 20 or more metal oxide particles with a transmission electron microscope and arithmetically averaging the diameters. When the metal oxide particles do not have a perfect circular shape, the length of the major axis is taken as the diameter.

Various functional groups may be introduced into the surface of the metal oxide particle as necessary.

(At least one selected from group consisting of hydrolyzable silicon compound represented by Formula (H), hydrolyzate thereof, and hydrolysis condensate thereof)

The hard coat layer forming composition may contain at least one selected from the group consisting of a hydrolyzable silicon compound represented by Formula (H), a hydrolyzate thereof, and a hydrolysis condensate thereof

(hereinafter, also simply referred to as "hydrolyzable silicon compound(s)") because a predetermined effect is more excellent. The hydrolyzable silicon compound refers to a compound in which a hydrolyzable group is bonded to a silicon atom.

Formula (H) $R^{h1}$-$L^{h}$-Si($R^{h2}$)$_s$($R^{h3}$)$_{3-s}$

$R^{h1}$ represents an epoxy group.

The definition of the epoxy group is as described above.

$L^{h}$ represents a divalent hydrocarbon group which may contain a hetero atom. The number of carbon atoms in the hydrocarbon group is not particularly limited, and is preferably 1 to 10. Examples of the divalent hydrocarbon group include an alkylene group, an alkenylene group, an alkynylene group, an arylene group, and a combination of these groups, and an alkylene group optionally containing a hetero atom is preferable.

$R^{h2}$ represents a hydrolyzable group. The hydrolyzable group is a group which is directly linked to Si (silicon atom) and can promote a hydrolysis reaction and/or a condensation reaction. Examples of the hydrolyzable group include an alkoxy group, a hydroxyl group, a halogen atom, an acyloxy group, an alkenyloxy group, and an isocyanate group.

$R^{h3}$ represents an alkyl group. The number of carbon atoms in the alkyl group represented by $R^{h3}$ is preferably 1 to 10.

s represents an integer of 1 to 3. s is preferably 3.

The hydrolyzate of the hydrolyzable silicon compound refers to a compound obtained by hydrolyzing a hydrolyzable group in the hydrolyzable silicon compound. The hydrolyzate may be one in which all of the hydrolyzable groups are hydrolyzed (complete hydrolyzate) or one in which some of the hydrolyzable groups are hydrolyzed (partial hydrolyzate). That is, the hydrolyzate may be a complete hydrolyzate, a partial hydrolyzate, or a mixture thereof.

In addition, the hydrolysis condensate of the hydrolyzable silicon compound refers to a compound obtained by hydrolyzing a hydrolyzable group in the hydrolyzable silicon compound and condensing the obtained hydrolyzate. The hydrolysis condensate may be one in which all hydrolyzable groups are hydrolyzed and all hydrolyzates are condensed (complete hydrolysis condensate) or one in which some hydrolyzable groups are hydrolyzed and some hydrolyzates are condensed (partial hydrolysis condensate). That is, the hydrolysis condensate may be a complete hydrolysis condensate, a partial hydrolysis condensate, or a mixture thereof.

(Another component)

The hard coat layer forming composition may contain another component than the above-described components.

The hard coat layer forming composition may contain a radical polymerization initiator. Examples of the radical polymerization initiator include a photoradical polymerization initiator and a thermal radical polymerization initiator.

The hard coat layer forming composition may contain a cationic polymerization initiator. Examples of the cationic polymerization initiator include a photocationic polymerization initiator and a thermal cationic polymerization initiator.

The hard coat layer forming composition may contain a solvent.

The solvent may be water or an organic solvent.

The type of the organic solvent is not particularly limited, and examples thereof include alcohol-based solvents, ketone-based solvents, ether-based solvents, ester-based solvents, hydrocarbon-based solvents, halogenated hydrocarbon-based solvents, amide-based solvents, sulfone-based solvents, and sulfoxide-based solvents.

The hard coat layer forming composition may contain at least one of the specific colorant or another colorant described above.

The specific colorant and another colorant are as described above.

The hard coat layer forming composition may contain various additives such as an ultraviolet absorber, an anti-aging agent, a coating film modifier, a light stabilizer, an antioxidant, a coloring inhibitor, a dye, a filler, and an internal mold release agent, as necessary.

The hard coat layer forming composition contains the above-described various components.

A method of producing the hard coat layer forming composition is not particularly limited, and for example, the above-described components may be mixed at once, or may be mixed stepwise.

The content of the polymerizable monomer in the hard coat layer forming composition is not particularly limited, but is preferably 1 to 100% by mass and more preferably 5 to 60% by mass with respect to the total solid content (hard coat layer constituting component(s)) in the hard coat layer forming composition because a predetermined effect is more excellent.

The total solid content (hard coat layer constituting component(s)) is a component or components constituting the hard coat layer through a curing treatment, and the solvent is not contained in the solid content. Even if a component is a liquid, if the component is a constituent of the hard coat layer, the component is calculated as a solid.

The content of the metal oxide particles in the hard coat layer forming composition is not particularly limited, but is preferably 10 to 90% by mass and more preferably 25 to 75% by mass with respect to the total solid content in the hard coat layer forming composition because a predetermined effect is more excellent.

When the hydrolyzable silicon compound is contained in the hard coat layer forming composition, the content of the hydrolyzable silicon compound is not particularly limited, but is preferably 0.5 to 30% by mass and more preferably 1 to 10% by mass with respect to the total solid content in the hard coat layer forming composition because a predetermined effect is more excellent.

One preferred embodiment of the hard coat layer forming composition is a hard coat layer forming composition containing a compound having a plurality of epoxy groups, a silsesquioxane compound having an oxetanyl group, and a polymerization initiator (hereinafter, also simply referred to as "specific composition").

As the polymerization initiator, a cationic polymerization initiator is preferably used, and a photocationic polymerization initiator and a thermal cationic polymerization initiator may be used in combination.

The content of the polyfunctional epoxy compound in the specific composition is not particularly limited, but is preferably 1 to 15% by mass and more preferably 1 to 10% by mass with respect to the total solid content (hard coat layer constituting component(s)) in the specific composition from the viewpoint of more excellent scratch resistance and appearance characteristics of the hard coat layer and a higher curing reaction rate.

The content of the silsesquioxane compound having an oxetanyl group in the specific composition is not particularly limited, but is preferably 35 to 70% by mass and more preferably 35 to 60% by mass with respect to the total solid content in the specific composition from the viewpoint of more excellent scratch resistance of the hard coat layer and less stress of the hard coat layer.

The content of the polymerization initiator in the specific composition is not particularly limited, but is preferably 0.1 to 3.0% by mass and more preferably 0.2 to 1.5% by mass with respect to the total solid content in the specific composition from the viewpoint of more excellent scratch resistance of the hard coat layer.

In a case where the specific composition contains the metal oxide particles, the content of the metal oxide particles is not particularly limited, but is preferably 25 to 60% by mass and more preferably 30 to 50% by mass with respect to the total solid content in the specific composition from the viewpoint of more excellent scratch resistance of the hard coat layer.

In a case where the hydrolyzable silicon compound is contained in the hard coat layer forming composition , the content of the hydrolyzable silicon compound is not particularly limited, but is preferably less than 10% by mass and more preferably less than 9% by mass with respect to the total solid content in the specific composition from the viewpoint of more excellent adhesion between the hard coat layer and the base. The lower limit is not particularly limited, but may be 1% by mass or more.

The content of the silsesquioxane compound having an oxetanyl group with respect to the total mass of the polyfunctional epoxy compound and the silsesquioxane compound having an oxetanyl group is preferably more than 70% by mass, more preferably 80% by mass or more, and still more preferably 85% by mass or more from the viewpoint of more excellent scratch resistance and appearance characteristics of the hard coat layer. The upper limit is not particularly limited, but may be 98% by mass or less.

The total mass of the polyfunctional epoxy compound and the silsesquioxane compound having an oxetanyl group with respect to the total solid content in the specific composition is not particularly limited, but is preferably 35 to 70% by mass from the viewpoint of excellent scratch resistance of the hard coat layer.

Examples of a method of forming a hard coat layer using the hard coat layer forming composition include a method in which a hard coat layer forming composition is applied onto a spectacle lens base to form a coating film, and the coating film is subjected to curing treatments such as a light irradiation treatment and a heat treatment.

As the curing treatment, either one or both of the light irradiation treatment and the heat treatment may be performed. In a case where both are performed, the light irradiation treatment and the heat treatment may be performed simultaneously, or one may be performed and then the other may be performed.

After the coating film is formed, a drying treatment such as a heat treatment may be performed to remove the solvent from the coating film as necessary.

A method of applying the hard coat layer forming composition is not particularly limited, and examples thereof include known methods (for example, a dipping coating method, a spin coating method, a spray coating method, an inkjet coating method, and a flow coating method) .

A film thickness of the coating film formed on the spectacle lens base is not particularly limited, and the film thickness is appropriately selected such that the hard coat layer can have a predetermined film thickness.

The conditions for the light irradiation treatment are not particularly limited, and suitable conditions are selected depending on the type of polymerization initiator to be used.

The type of light at the time of light irradiation is not particularly limited, and examples thereof include ultraviolet rays and visible rays. Examples of a light source include a high-pressure mercury lamp.

An integrated light amount at the time of light irradiation is not particularly limited, but is preferably 100 to 3000

mJ/cm$^2$ and more preferably 100 to 2000 mJ/cm$^2$ from the viewpoint of productivity and curability of the coating film.

The conditions for the heat treatment are not particularly limited, and optimum conditions are selected depending on the type of polymerization initiator to be used.

The heating temperature is preferably 30 to 100°C, and the heating time is preferably 5 to 360 minutes.

A film thickness of the hard coat layer is not particularly limited, but is preferably 1 μm or more, more preferably 5 μm or more, and still more preferably 10 μm or more. The upper limit of the film thickness may be, for example, 30 μm or less.

The above film thickness is an average film thickness, and as a measurement method thereof, film thicknesses of any five points of the hard coat layer are measured and arithmetically averaged to obtain the film thickness.

The hard coat layer may contain additives such as a bluing agent, a light stabilizer, and an antioxidant.

<Antireflection film>

The spectacle lens of the present disclosure may have an antireflection film. The antireflection film is preferably disposed on or above the hard coat layer on the side opposite to the spectacle lens base.

The antireflection film is a layer having a function of preventing reflection of incident light. Specifically, the antireflection film may have low reflection characteristics (broadband low reflection characteristics) over the entire visible region of 380 to 780 nm.

A structure of the antireflection film is not particularly limited, and may be a single layer structure or a multilayer structure.

The antireflection film is preferably an inorganic antireflection film. The inorganic antireflection film is an antireflection film constituted of an inorganic compound.

In the case of a multilayer structure, a structure in which a low refractive index layer and a high refractive index layer are alternately laminated is preferable. Examples of a material constituting the high refractive index layer include oxides of titanium, zircon, aluminum, niobium, tantalum, and lanthanum. Examples of a material constituting the low refractive index layer include an oxide of silica.

A method of producing the antireflection film is not particularly limited, and examples thereof include dry methods such as a vacuum vapor deposition method, a sputtering method, an ion plating method, an ion beam assisted method, and a CVD method.

<Water-repellent and oil-repellent layer>

The spectacle lens of the present disclosure may include a water-repellent and oil-repellent layer. The water-repellent and oil-repellent layer is preferably disposed at the outermost layer of the spectacle lens.

The water-repellent and oil-repellent layer reduces the surface energy of the spectacle lens, improves the function of preventing contamination of the spectacle lens, and improves the slipperiness of the surface of the spectacle lens, and as a result, improves the abrasion resistance of the spectacle lens.

A material constituting the water-repellent and oil-repellent layer is not particularly limited, and examples thereof include a fluorine-containing compound (a compound containing a fluorine atom) and a silicon-containing compound (a compound containing a silicon atom). In particular, from the viewpoint of more excellent water and oil repellency, the water-repellent and oil-repellent layer preferably contains a fluorine-containing compound, and more preferably contains at least one selected from the group consisting of a fluorine-substituted alkyl group-containing organosilicon compound, a hydrolysate thereof, and a hydrolysis condensate thereof.

The materials constituting the water-repellent and oil-repellent layer may be used singly or in combination of two or more types thereof.

The fluorine-substituted alkyl group-containing organosilicon compound is an organosilicon compound containing an alkyl group in which some or all of hydrogen atoms are substituted with fluorine atoms, and has a hydrolyzable group.

Here, the hydrolyzable group is a group which is directly linked to a silicon atom and can promote a hydrolysis reaction and a condensation reaction, and examples thereof include an alkoxy group, a halogen atom, an acyloxy group, an alkenyloxy group, and an isocyanate group. In a case where a plurality of hydrolyzable groups are directly linked to one silicon atom, the hydrolyzable groups may be the same or different.

A hydrolyzate of the fluorine-substituted alkyl group-containing organosilicon compound refers to a compound obtained by hydrolyzing a hydrolyzable group in the fluorine-substituted alkyl group-containing organosilicon compound. The hydrolyzate may be one in which all of the hydrolyzable groups are hydrolyzed (complete hydrolyzate) or one in which some of the hydrolyzable groups are hydrolyzed (partial hydrolyzate). That is, the hydrolyzate may be a complete hydrolyzate, a partial hydrolyzate, or a mixture thereof.

The hydrolysis condensate of the fluorine-substituted alkyl group-containing organosilicon compound refers to a

compound obtained by hydrolyzing a hydrolyzable group in the fluorine-substituted alkyl group-containing organosilicon compound and condensing the obtained hydrolyzate. The hydrolysis condensate may be one in which all hydrolyzable groups are hydrolyzed and all hydrolyzates are condensed (complete hydrolysis condensate) or one in which some hydrolyzable groups are hydrolyzed and some hydrolyzates are condensed (partial hydrolysis condensate). That is, the hydrolysis condensate may be a complete hydrolysis condensate, a partial hydrolysis condensate, or a mixture thereof.

A thickness of the water-repellent and oil-repellent layer of the spectacle lens is not particularly limited, but is preferably 5 to 35 nm.

A method of forming the water-repellent and oil-repellent layer is not particularly limited, and can be freely selected according to a material to be used, desired performance, a thickness, or the like. Examples of the method include a method in which a composition for forming the water-repellent and oil-repellent layer containing the fluorine-substituted alkyl group-containing organosilicon compound is applied onto a lens base and, as necessary, subjected to a curing treatment, and a dry method.

Examples of an application method include a dip coating method, a roll coating method, a bar coating method, a spin coating method, a spray coating method, a die coating method, and a gravure coating method.

Examples of the curing treatment include a light irradiation treatment, a heat treatment, and a water vapor contact treatment. Examples of the water vapor contact treatment include a treatment of bringing the composition into contact with air of which humidity is controlled to 50 to 90%RH. The above curing treatments may be performed in combination.

Examples of the dry method include the same methods as those for the above-described antireflection film.

<Applications>

The spectacle lens of the present disclosure is suitably used as a lens for spectacles. The spectacle lens of the present disclosure is particularly suitable as a spectacle lens for a user with oxyopia because glare is reduced in more users with oxyopia.

Note that spectacle lenses having different transmission spectra may be used as the right and left lenses of spectacles according to a difference in oxyopia between the right and left eyes.

## EXAMPLES

Hereinafter, the above embodiments will be described in more detail with reference to Examples and Comparative Examples, but the present disclosure is not limited by these Examples at all.

<Preparation of dyeing liquid>

A dye, a surfactant, and pure water were mixed to prepare a dyeing liquid.

Pure water (1000 parts by mass) was put in a container, and FSP YELLOW LY dye (manufactured by Futaba Industrial Co., Ltd) (2.0 parts by mass) as a yellow dye and NICCA SUNSOLT #7000 (product name; manufactured by Nicca Chemical Co., Ltd) (1.0 parts by mass) were added thereto to obtain a dyeing liquid 1. Pure water (1000 parts by mass) was put in a container, and FSP BLUE AUL-S dye (manufactured by Futaba Industrial Co., Ltd) (2.0 parts by mass) as a blue dye and NICCA SUNSOLT #7000 (1.0 parts by mass) were added thereto to obtain a dyeing liquid 2. Pure water (1000 parts by mass) was put in a container, and FSP RED BL dye (manufactured by Futaba Industrial Co., Ltd) (2.0 parts by mass) as a red dye and NICCA SUNSOLT #7000 (1.0 parts by mass) were added thereto to obtain a dyeing liquid 3.

In addition, FDB-006 (manufactured by Yamada Chemical Co., Ltd) (0.05 g) as a dye, cellulose acetate butyrate (3 g) as a binder resin, tetrahydrofuran (96.7 g) as a solvent, and L70001 (manufactured by Dow Corning Toray Co., Ltd) (0.03 g) as a surfactant were mixed and stirred to obtain a dyeing liquid 4.

In the preparation of the dyeing liquid 4, the amount of FDB-006 was changed from 0.05 g to 0.2 g to obtain a dyeing liquid 5. In the preparation of the dyeing liquid 4, the amount of FDB-006 was changed from 0.05 g to 0.3 g to obtain a dyeing liquid 6. In the preparation of the dyeing liquid 4, the amount of FDB-006 was changed from 0.05 g to 0.5 g to obtain a dyeing liquid 7.

The FSP YELLOW FL dye and the FDB-006 dye correspond to specific dyes. That is, the FSP YELLOW LY dye and the FDB-006 dye have a maximum absorption wavelength in a wavelength range of 400 of 510 nm, and the maximum absorption coefficient at wavelengths of 550 to 780 nm is 1/5 or less of the absorption coefficient at the maximum absorption wavelength.

More specifically, the absorption coefficient at the maximum absorption wavelength of the FSP YELLOW LY dye was $1.3 \times 10^5$ mL/(g·cm), and the absorption coefficient at the maximum absorption wavelength of the FDB-006 dye was $1.2 \times 10^5$ mL/(g·cm). The maximum absorption coefficient of the FSP YELLOW LY dye at wavelengths of 550 to 780 nm was $4.8 \times 10^2$ mL/(g·cm), and the maximum absorption coefficient of the FDB-006 dye at wavelengths of 550 to 780 nm was 0 mL/(g·cm).

<Example 1>

A concave surface of a plastic spectacle lens base (Nikon LIGHT 4AS having a size of 80 φ and a center thickness of 2 mm, manufactured by Nikon-Essilor Co., Ltd.) constituted of a thiourethane resin having a refractive index of 1.67 was coated with the dyeing liquid 4 by using a spin coater. After coating, heating was performed at 160°C for 1 hour to allow the dye to permeate into the plastic spectacle lens base. Thereafter, the plastic spectacle lens base was cooled, and further, a resin layer on the surface was removed to obtain a spectacle lens base (dyed lens base) into which the dye has permeated.

Next, the prepared three dyeing liquids 1, 2, and 3 were heated to 90°C, and the dyed lens base was dyed by being immersed in each of the dyeing liquids 1, 2, and 3, to obtain a brown-dyed lens base (brown lens base).

A urethane-based, impact resistance improving coating film (primer layer) having a thickness of about 1 μm was formed on the surface of the obtained brown lens base. A silicone-based hard coat layer having a thickness of about 2 μm was formed on the primer layer. A multilayer antireflection film constituted of an inorganic oxide having a thickness of about 0.3 μm was formed on the hard coat layer by a vacuum vapor deposition method to obtain a spectacle lens (spectacle lens 1) of Example 1.

<Example 2>

A spectacle lens (spectacle lens 2) of Example 2 was obtained in the same manner as in Example 1 except that the dyeing liquid 5 was used instead of the dyeing liquid 4 in Example 1.

<Example 3>

A spectacle lens (spectacle lens 3) of Example 3 was obtained in the same manner as in Example 1 except that the dyeing liquid 6 was used instead of the dyeing liquid 4 in Example 1.

<Example 4>

A spectacle lens (spectacle lens 4) of Example 4 was obtained in the same manner as in Example 1 except that the dyeing liquid 7 was used instead of the dyeing liquid 4 in Example 1.

<Comparative Example 1>

Each of the prepared three dyeing liquids 1, 2 and 3 was heated to 90°C, and the same plastic spectacle lens as that of Example 1 was immersed in each dyeing liquid and dyed to obtain a brown lens base. At the time of dyeing, the immersion time for each dyeing liquid was adjusted to obtain the same color density and color tone as those of the spectacle lens 1 while the color tone of the lens base being dyed was visually checked under daylight LED illumination.

Next, a primer layer, a hard coat layer, and an antireflection film were formed on the brown lens base in the same manner as in Example 1, thereby obtaining a spectacle lens (spectacle lens 5) of Comparative Example 1.

<Comparative Example 2>

A spectacle lens (spectacle lens 6) of Comparative Example 2 was obtained in the same manner as in Comparative Example 1 except that the immersion time in each dyeing liquid was adjusted to obtain the same color density and color tone as those of the spectacle lens 2 in Comparative Example 1.

<Comparative Example 3>

A spectacle lens (spectacle lens 6) of Comparative Example 2 was obtained in a similar manner to Comparative Example 1 except that the immersion time for each dyeing liquid was adjusted so as to have the same color density and color tone as those of the spectacle lens 3 in Comparative Example 1.

<Comparative Example 4>

A spectacle lens (spectacle lens 6) of Comparative Example 2 was obtained in the same manner as in Comparative Example 1 except that the immersion time for each dyeing liquid was adjusted to obtain the same color density and color tone as those of the spectacle lens 4 in Comparative Example 1.

The spectacle lenses of Examples 1 to 4 and Comparative Examples 1 to 4 were obtained according to the procedures described above. Obtained transmission spectra of the respective spectacle lenses are shown in FIGS. 2 to 5. The transmission spectrum of each spectacle lens was acquired by the method described above.

Table 1 shows Ta (the average transmittance at wavelengths of 430 to 480 nm), Tb (the average transmittance at

wavelengths of 550 to 780 nm), Tc (the average transmittance at wavelengths of 380 to 430 nm), Td (the average transmittance at wavelengths of 480 to 550 nm), and y, which are described above, and values each obtained by subtracting the transmittance of the spectacle lens at every 5 nm interval at wavelengths of 430 to 480 nm from Ta. In Table 1, for example, a value obtained by subtracting the transmittance at a wavelength of 480 nm from Ta is stated in the field of "Ta-T480 nm".

The unit of the values in Table 1 is %.

[Table 1]

| Table 1 | Example 1 | Example 2 | Example 3 | Example 4 | Comparative Example 1 | Comparative Example 2 | Comparative Example 3 | Comparative Example 4 |
|---|---|---|---|---|---|---|---|---|
| Ta | 69.0 | 61.2 | 40.3 | 17.2 | 70.8 | 62.2 | 38.3 | 24.3 |
| Tb | 93.6 | 91.1 | 87.6 | 85.2 | 93.8 | 93.6 | 87.6 | 86.6 |
| Tc | 28.6 | 26.5 | 18.6 | 8.1 | 26.9 | 21.6 | 11.6 | 5.5 |
| Td | 82.7 | 78.8 | 66.6 | 56.7 | 83.7 | 82.7 | 69.4 | 65.8 |
| y | 3.1 | 3.9 | 6.0 | 8.3 | 2.9 | 3.8 | 6.2 | 7.6 |
| Ta-T480 nm | -0.1 | 1.7 | 1.4 | -0.8 | -7.2 | -12.5 | -16.3 | -19.1 |
| Ta-T475 nm | -0.8 | 0.2 | 0.1 | -1.6 | -5.6 | -9.8 | -12.6 | -14.4 |
| Ta-T470 nm | -1.2 | -0.7 | -0.6 | -1.7 | -4.0 | -7.1 | -8.8 | -9.4 |
| Ta-T465 nm | -1.0 | -0.2 | -0.2 | -0.7 | -2.8 | -4.7 | -5.2 | -4.9 |
| Ta-T460 nm | 0.1 | 0.9 | 1.0 | 0.7 | -1.1 | -1.8 | -1.4 | -0.8 |
| Ta-T455 nm | 1.0 | 1.0 | 1.5 | 1.4 | 0.5 | 0.7 | 1.8 | 2.7 |
| Ta-T450 nm | 0.5 | 0.4 | 1.0 | 1.3 | 1.7 | 3.2 | 4.6 | 5.7 |
| Ta-T445 nm | 0.1 | -0.5 | -0.1 | 0.8 | 3.1 | 5.6 | 7.1 | 8.0 |
| Ta-T440 nm | 0.0 | -1.0 | -1.2 | 0.4 | 4.3 | 7.4 | 9.1 | 9.7 |
| Ta-T435 nm | 0.4 | -0.8 | -1.6 | 0.2 | 5.2 | 8.7 | 10.4 | 10.8 |
| Ta-T430 nm | 1.0 | -1.1 | -1.5 | 0.0 | 5.9 | 10.4 | 11.2 | 11.6 |

From Table 1, it can be seen that in the transmission spectra of the spectacle lenses of Examples 1 to 4, the transmittance of the spectacle lens at every 5 nm interval at wavelengths of 430 to 480 nm is within the range of Ta ± y, and Tb is more than Ta. On the other hand, it can be seen that in the transmission spectra of the spectacle lenses of Comparative Examples 1 to 4, the transmittance of the spectacle lens at every 5 nm interval at wavelengths of 430 to 480 nm does not fall within the range of Ta ± y.

<Evaluation>

Four subjects performed sensory evaluation as to which spectacle lens had a higher effect of reducing glare when viewing scenery including a building, a park, and a road through the spectacle lenses of Example 1 and Comparative Example 1, Example 2 and Comparative Example 2, Example 3 and Comparative Example 3, and Example 4 and Comparative Example 4.

More specifically, the four subjects performed the above evaluation in the afternoon of a sunny day as a condition 1 and in the morning of a clear and sunny day as a condition 2, and compared the spectacle lenses of Examples with those of Comparative Examples. When a subject sensed that one of the spectacle lenses had a higher effect of reducing glare, the spectacle lens that further reduced glare was set to 1 point, and the other spectacle lens was set to 0 points. When a subject sensed that the effect of reducing glare was equivalent in both spectacle lenses, both spectacle lenses were set to 0.5 points.

When the spectacle lenses of Example 1 and Comparative Example 1, Example 2 and Comparative Example 2, Example 3 and Comparative Example 3, and Example 4 and Comparative Example 4 were used, the sums of the points given by the respective subjects are shown in Table 2 below.

[Table 2]

| Table 2 | Example | Comparative Example |
|---|---|---|
| Comparison between Example 1 and Comparative Example 1 | 5.5 | 2.5 |
| Comparison between Example 2 and Comparative Example 2 | 6.0 | 2.0 |
| Comparison between Example 3 and Comparative Example 3 | 7.0 | 1.0 |
| Comparison between Example 4 and Comparative Example 4 | 4.5 | 3.5 |

From the results in Table 2, it has been confirmed that the spectacle lenses of Examples reduce glare in more users than the spectacle lenses of Comparative Examples.

REFERENCE SIGNS LIST

10 Spectacle lens
12 Spectacle lens base
14 Hard coat layer
16 Antireflection film

**Claims**

**1.** A spectacle lens containing a colorant,

wherein the colorant includes a specific colorant having a maximum absorption wavelength in a wavelength range of 400 of 510 nm,
a maximum absorption coefficient of the specific colorant at wavelengths of 550 to 780 nm is 1/5 or less of an absorption coefficient of the specific colorant at the maximum absorption wavelength,
when an average transmittance of the spectacle lens at wavelengths of 430 to 480 nm is Ta, a transmittance of the spectacle lens at every 5 nm interval at the wavelengths of 430 to 480 nm is within a range of Ta ± y, and
when an average transmittance of the spectacle lens at wavelengths of 550 to 780 nm is Tb, Tb is more than Ta,
where y is a value represented by Formula (1):

$$\text{Formula (1)} \quad y = (100\% - Ta) \times 0.1,$$

where units of Ta, Tb, and y are %.

**2.** The spectacle lens according to claim 1,
wherein a relationship of Formula (2) is satisfied with respect to Ta and Tb,

$$\text{Formula (2)} \quad 0.1 \leq (100\% - Tb)/(100\% - Ta) \leq 0.9.$$

**3.** The spectacle lens according to claim 1 or 2,
wherein Ta is 2 to 90%.

**4.** The spectacle lens according to any one of claims 1 to 3,

wherein the colorant includes two or more types of the specific colorants.

FIG. 1

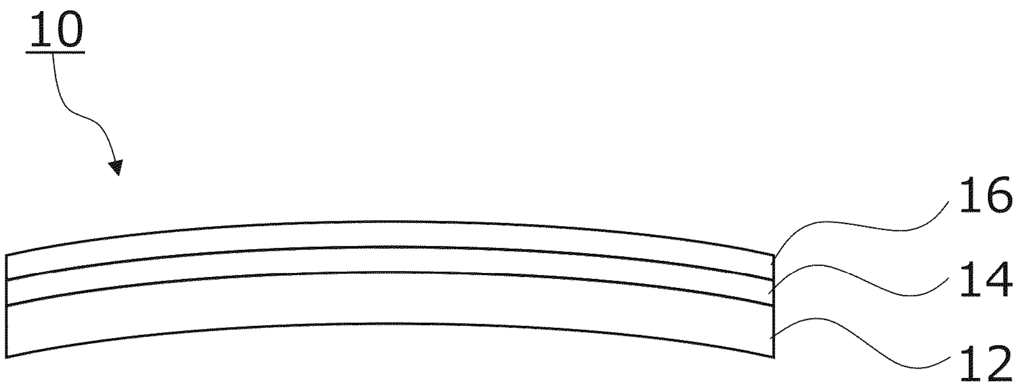
10
16
14
12

FIG. 2

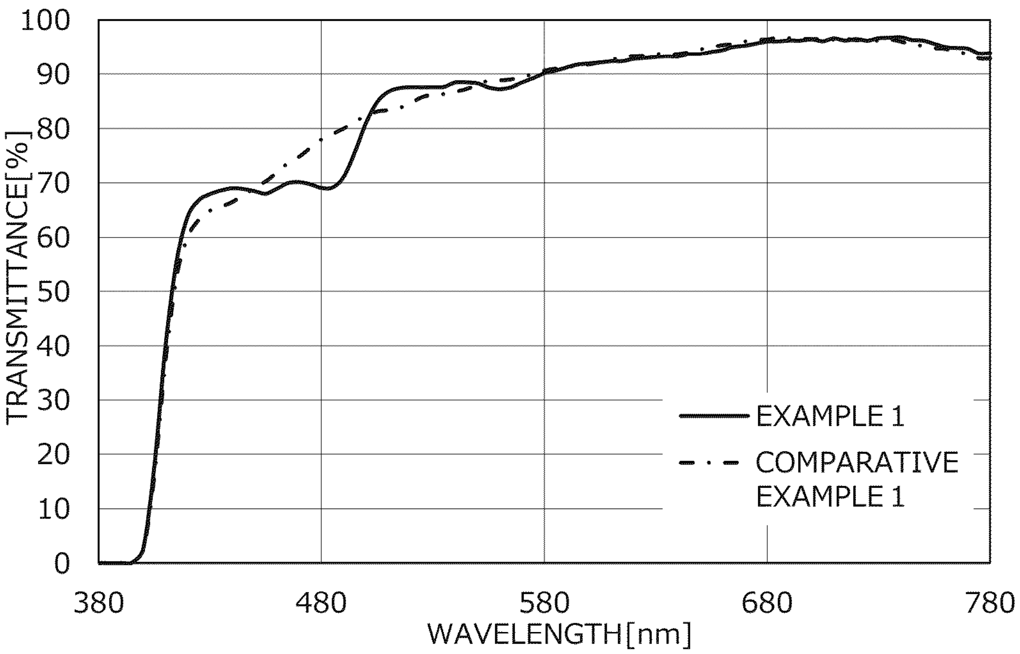
TRANSMITTANCE[%]
100
90
80
70
60
50
40
30
20
10
0
380
480
580
680
780
WAVELENGTH[nm]
EXAMPLE 1
COMPARATIVE EXAMPLE 1

FIG. 3

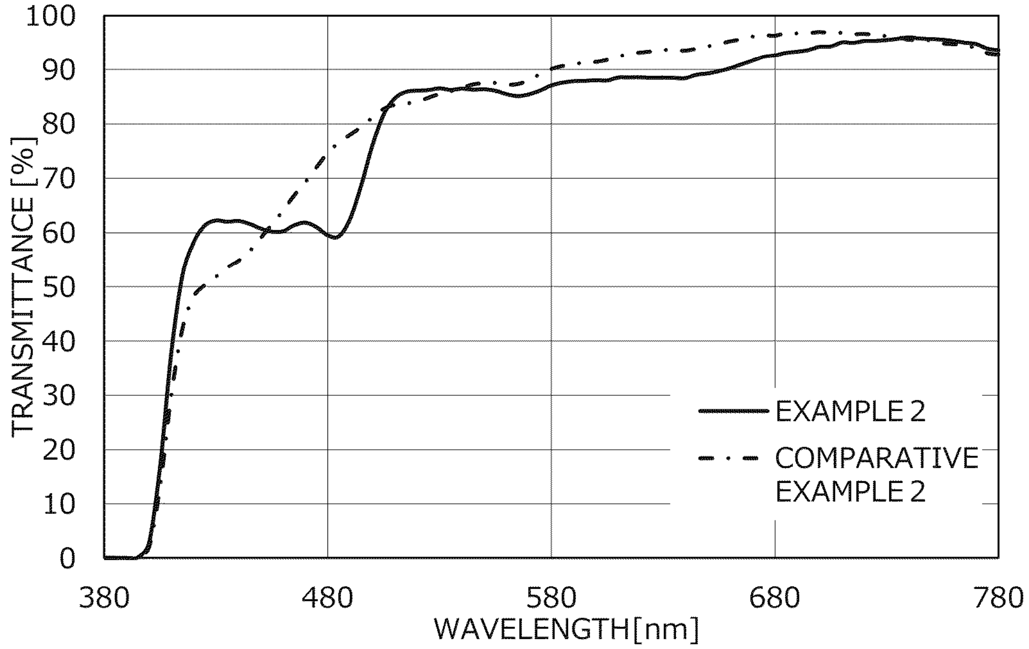
100
90
80
70
60
50
40
30
20
10
0
380
480
580
680
780
TRANSMITTANCE [%]
WAVELENGTH[nm]
EXAMPLE 2
COMPARATIVE EXAMPLE 2

FIG. 4

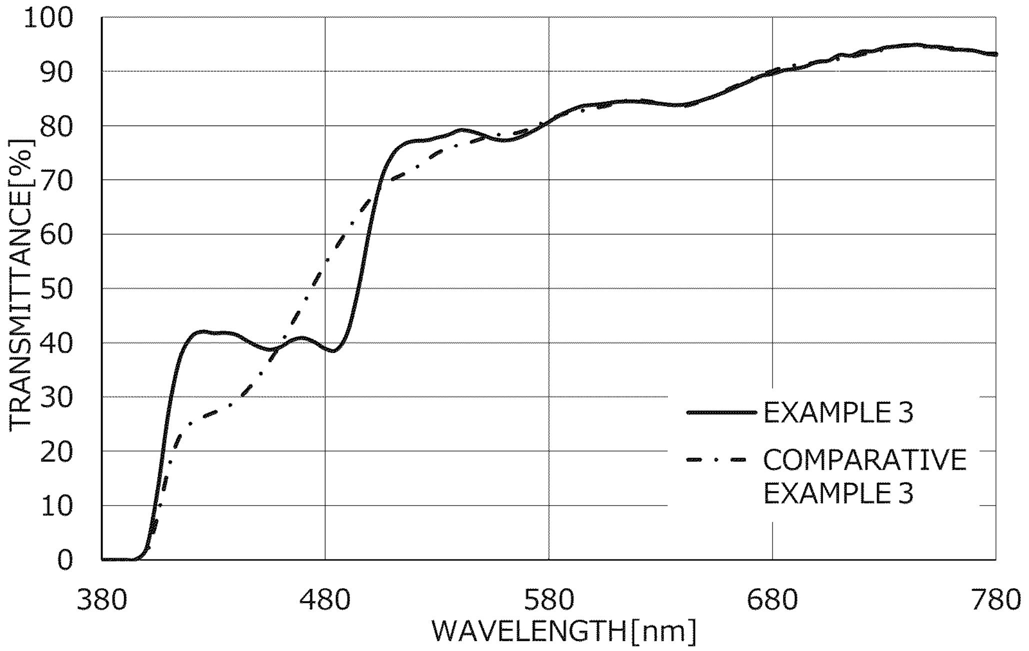
100
90
80
70
60
50
40
30
20
10
0
380
480
580
680
780
TRANSMITTANCE[%]
WAVELENGTH[nm]
EXAMPLE 3
COMPARATIVE EXAMPLE 3

FIG. 5

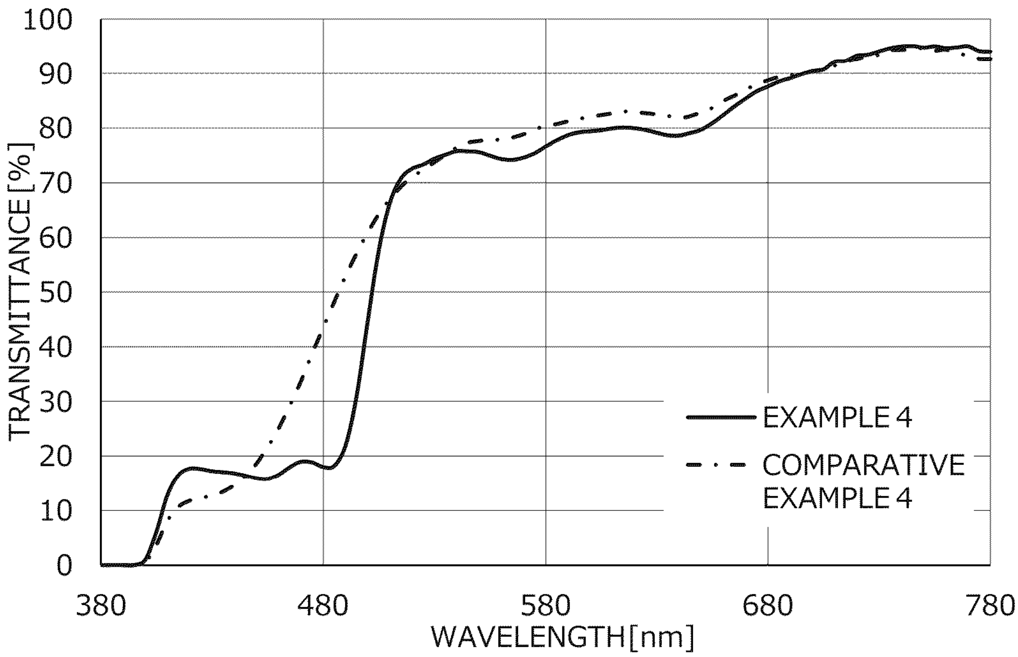
100
90
80
70
60
50
40
30
20
10
0
TRANSMITTANCE[%]
380
480
580
680
780
WAVELENGTH[nm]
EXAMPLE 4
COMPARATIVE EXAMPLE 4

## INTERNATIONAL SEARCH REPORT

International application No.
**PCT/JP2023/046569**

**A. CLASSIFICATION OF SUBJECT MATTER**

***G02C 7/00***(2006.01)i; ***G02B 5/22***(2006.01)i; ***G02C 7/10***(2006.01)i
FI: G02C7/00; G02B5/22; G02C7/10

According to International Patent Classification (IPC) or to both national classification and IPC

**B. FIELDS SEARCHED**

Minimum documentation searched (classification system followed by classification symbols)

G02C1/00-13/00; G02B5/20-5/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2014-38247 A (NIKON-ESSILOR CO., LTD.) 27 February 2014 (2014-02-27) paragraphs [0013], [0018]-[0020], [0026]-[0028], [0041]-[0046], fig. 3 | 1–3<br><br>4 |
| Y | JP 2019-77784 A (LINTEC CORPORATION) 23 May 2019 (2019-05-23) paragraphs [0025], [0033], [0131]-[0141], [0145], [0153], [0158]-[0159], example 4-5 | 4 |
| A | JP 2015-148673 A (NIKON-ESSILOR CO., LTD.) 20 August 2015 (2015-08-20) entire text, fig. 1-7 | 1-4 |
| A | JP 2013-54275 A (NIKON-ESSILOR CO., LTD.) 21 March 2013 (2013-03-21) entire text, fig. 1-5 | 1-4 |
| A | WO 2018/230513 A1 (TOKUYAMA CORPORATION) 20 December 2018 (2018-12-20) entire text | 1-4 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2023/046569**

| Patent document cited in search report | Publication date (day/month/year) | Patent family member(s) | Publication date (day/month/year) |
|---|---|---|---|
| JP 2014-38247 A | 27 February 2014 | (Family: none) | |
| JP 2019-77784 A | 23 May 2019 | CN 109694655 A<br>KR 10-2019-0045855 A<br>TW 201922990 A | |
| JP 2015-148673 A | 20 August 2015 | (Family: none) | |
| JP 2013-54275 A | 21 March 2013 | (Family: none) | |
| WO 2018/230513 A1 | 20 December 2018 | EP 3640686 A1<br>entire text<br>US 2020/0231840 A1<br>CN 110770611 A<br>KR 10-2020-0018444 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020067407 A